(19) Europäisches Patentamt
European Patent Office
Office européen des brevets

(11) Veröffentlichungsnummer: **0 274 123 B1**

(12) # EUROPÄISCHE PATENTSCHRIFT

(45) Veröffentlichungstag der Patentschrift: **15.01.92**

(51) Int. Cl.$^5$: **C08G 64/00**, C08G 63/64

(21) Anmeldenummer: **87119217.5**

(22) Anmeldetag: **24.12.87**

(54) **Sequenziert aufgebaute Copolymere auf der Basis von cyclischen Carbonaten und Estern.**

(30) Priorität: **06.01.87 DE 3700193**

(43) Veröffentlichungstag der Anmeldung:
**13.07.88 Patentblatt 88/28**

(45) Bekanntmachung des Hinweises auf die Patenterteilung:
**15.01.92 Patentblatt 92/03**

(84) Benannte Vertragsstaaten:
**DE FR GB IT NL**

(56) Entgegenhaltungen:
**EP-A- 0 255 941**
**FR-A- 2 235 965**
**US-A- 3 379 693**
**US-A- 3 639 503**
**US-A- 3 641 200**

**DIE MAKROMOLEKULARE CHEMIE, Band 187, Nr. 12, Dezember 1986, Seiten 2833-2839, Basel, CH; H. KEUL et al.: "Block polymers obtained by means of anionic polymerization. Polystyrene-block-(epsilon-caprolactone) and polystyrene-block-poly(2,3-dimethyltrimethylene carbonate)"**

(73) Patentinhaber: **BAYER AG**
**W-5090 Leverkusen 1 Bayerwerk(DE)**

(72) Erfinder: **Eichenauer, Herbert, Dr.**
**Goethestrasse 71**
**W-4047 Dormagen(DE)**
Erfinder: **Leitz, Edgar, Dr.**
**Goethestrasse 63**
**W-4047 Dormagen(DE)**
Erfinder: **Ott, Karl-Heinz, Dr.**
**Paul-Klee-Strasse 54**
**W-5090 Leverkusen(DE)**

EP 0 274 123 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft sequenziert aufgebaute Copolymere, die Sequenzen hergestellt aus cyclischen Carbonaten oder cyclischen Estern enthalten, sowie ein Verfahren zu ihrer Herstellung.

Polymere mit sequenzartigem Aufbau, z.B. Blockcopolymere, Können interessante technologische Eigenschaften aufweisen, z.B. besitzen sie - je nach Struktur, Aufbau und chemischer Zusammensetzung - Eigenschaften von elastischen Thermoplasten oder thermoplastischen Elastomeren.

Solche Polymere haben nur Bedeutung, wenn sie gut verarbeitbar sind z.B. bei üblichen Temperaturen durch übliche Verfahren wie Spritzguß, Extrusion oder Kalandrierung. Oft wird die Stabilität eines Polymeren nicht nur durch seine chemische Grundstruktur bestimmt, sondern auch durch andere Größen wie die Zahl der chemischen und strukturellen Fehlstellen, die Stabilität des Polymeren erhöhende Strukturelemente, Endgruppen, die Molekulargewichtsverteilung und die chemische Uneinheitlichkeit und dies in nicht vorhersehbarer Weise.

In US-A-3 693503 werden Blockcopolymere beschrieben, bestehend aus alternierenden Polylacton-Blöcken und aliphatischen Polycarbonat-Blöcken.

Es wurden nun spezielle sequenziert aufgebaute Copolymerisate auf Basis von cyclischen Carbonaten und Estern gefunden, deren Eigenschaften nach einem besonderen Verfahren in weiten Grenzen eingestellt werden können.

Gegenstand der Erfindung sind Polymere mit sequenzartigem Aufbau der idealisierten Formel (I):

$\{ A - X - B \}_r$ (I)

mit r = 1 bis 20, insbesondere 1 bis 10, worin

-A- = Polymerisat eines cyclischen Carbonates der allgemeinen Formeln (II) und/oder (III) ("Block A")

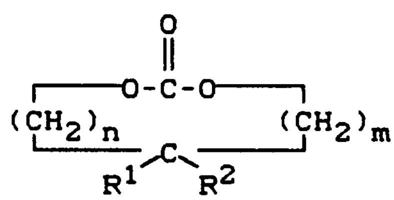

(II)

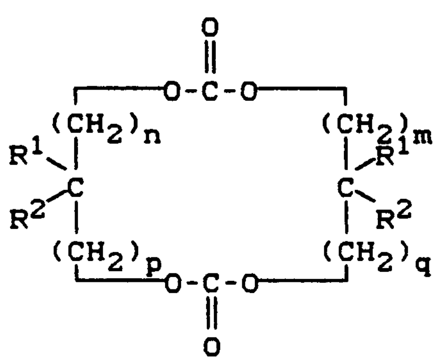

(III)

-B- = Polymerisat eines Lactons der allgemeinen Formel (IV) ("Block B")

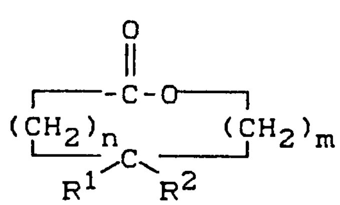

(IV)

X = Mittelstück, enthaltend sowohl das cyclische Carbonat der Formel (II) und/oder (III) als auch das Lacton

der Formel (IV) in polymerisierter Form, wobei die Konzentration der Reste von (II) und/oder (III) in Richtung auf -B- und die Konzentration der Reste (IV) in Richtung auf -A- kontinuierlich abnimmt ("tapered structure") wobei in den Formeln (II), (III) und (IV) m, n, p und q unabhängig voneinander 0, 1, 2, 3, 4, 5 oder 6 sind mit den Bedingungen, daß die Summe n+m in (II) mindestens 1, die Summe n+m in (IV) mindestens 1 und die Summen n+p sowie m+q in (III) mindestens 1 betragen, und $R^1$ und $R^2$ = H, $C_{1-6}$-Alkyl, $C_{3-6}$-Alkenyl, $C_{1-6}$-Alk(en)yloxy-$C_{1-6}$-alkyl, insbesondere H, $CH_3$ und $C_2H_5$ bedeuten.

Die mittleren Molekulargewichte der Blöcke A und B sind 500 bis 1.000.000, vorzugsweise 1.000 bis 500.000 und besonders bevorzugt 2.000 bis 250.000; die mittleren Molekulargewichte der Mittelstücke X 500 bis 10.000,

Besonders bevorzugte cyclische Carbonate (II) und (III) sind Trimethylglykolcarbonat, Neopentylglykolcarbonat, 1,4-Butandiolcarbonat sowei dimere Carbonate des Pentandiols oder des Hexandiols.

Bevorzugtes Lacton (IV) ist $\epsilon$-Caprolacton und/oder Pivalolacton.

In den erfindungsgemäßen Polymeren können die mittleren Molekulargewichte der Blöcke A und B sowie der Mittelstücke X verschieden oder nahezu gleich groß sein.

Die Polymerisate enthalten die Blöcke A und B jeweils in Mengen von 5 bis 95 Gew.-% (bezogen auf Gesamtmenge A + B), vorzugsweise aber in Mengen von 5 bis 80 Gew.-% A und 95 bis 20 Gew.-% B (bezogen auf A + B), sowie 5 bis 80 Gew.-% B und 95 bis 20 Gew.-% A (bezogen auf A + B); der Gehalt an Mittelstücken X mit einer "tapered structure" beträgt 5 bis 50 Gew.-% (bezogen auf A + B + X), vorzugsweise 5 bis 25 Gew.-% (bezogen auf A + B + X).

Ein weiterer Gegenstand der Erfindung ist ein Verfahren zur Herstellung der Polymerisate.

In diesem Verfahren gibt man eine Lösung eines Gemisches aus cyclischen Carbonaten (II) und/oder (III) und Lacton (IV) in einem aromatischen Lösungsmittel oder einem Ether portionsweise (Anzahl der Portionen = r) zu einer Lösung einer Alkylalkalimetall- bzw. Arylalkalimetall-Verbindung als Initiator, polymerisiert bei +20°C bis -78°C, vorzugsweise zwischen +10°C und -30°C, und isoliert danach das Polymere.

Bevorzugt kann im Anschluß an die Polymerisation das Reaktionsprodukt neutralisiert werden oder das gebildete anionische Polymere mit einem Alkylhalogenid, Carbonsäurechlorid, Carbonsäureanhydrid oder Carbonsäureester umgesetzt werden.

Geeignete aromatische Lösungsmittel sind Benzol, Toluol; ein geeigneter Ether ist Tetrahydrofuran; zum Erzielen bestimmter Molekulargewichte der Copolymeren kann man auch in Gemischen aus aromatischen Kohlenwasserstoffen und Ethern arbeiten. Geeignete Alkylalkalimetallverbindungen sind z.B. Butyllithium, insbesondere sekundär-Butyllithium, Na-Naphthalin und K-Naphthalin.

Nach der Copolymerisation kann das gebildete Polymer neutralisiert oder mit geeigneten Verbindungen umgesetzt werden, die mit Carbonionen reagieren können - unter Ausbildung eines ungeladenen stabilen Endproduktes.

Geeignete Neutralisationsmittel sind z.B. schwache anorganische sowie organische Säuren oder saure Salze von Protonensäuren, N-H- und C-H-aciden Säuren; Verbindungen, die mit Carbanionen reagieren können, sind z.B. Alkylhalogenide (insbesondere Methylchlorid, Methyliodid, Benzylchlorid, Benzylbromid), Carbonsäurechloride (insbesondere Benzoylchlorid, Chlorameisensäureester, Phosgen, Acetylchlorid, Caproylchlorid, Stearoylchlorid), Carbonsäurenanhydride (insbesondere Acetanhydrid, Bernsteinsäureanhydrid) und Carbonsäureester (insbesondere aktivierte Ester, wie Carbonsäurephenylester, Carbonsäurenitrophenylester sowie Alkylester von Carbonsäuren), wobei die Alkylgruppen gegebenenfalls durch aktivierende Gruppen wie Nitrogruppen, CN-Gruppen, Carboxylgruppen substituiert sein können.

Üblicherweise werden diese Verbindungen am Ende der Copolymerisation dem Reaktionsprodukt zugefügt, vorzugsweise in gelöster Form, wobei auf gute Durchmischung geachtet werden muß. Vorteilhaft ist es, diese Verbindungen in stöchiometrischem Überschuß einzubringen.

Das Copolymer kann aus dem Reaktionsprodukt isoliert werden, gegebenenfalls unter Abtrennung unerwünschter Verunreinigungen.

Dazu kann man das Copolymere aus der Polymerlösung ausfällen und nachträglich durch Waschen reinigen; bevorzugt ist das Polymer durch Ausdampfen zu isolieren. Während der Ausdampfung oder vor dieser kann das Polymer gereinigt werden z.B. durch azeotrope Destillation, Extraktion oder fraktionierte Destillation.

Da das erfindungsgemäße Verfahren mit "lebenden" Anionen arbeitet, sind dementsprechende Bedingungen einzuhalten z.B. Wasserfreiheit. Die Wahl der Reaktions-Bedingungen für das erfindungsgemäße Verfahren, insbesondere von Temperatur und Lösungsmittel, ist wichtig, da bei der Polymerisation der cyclischen Monomeren unerwünschte Abbruchreaktionen stattfinden können, durch die die Eigenschaften der Copolymerisate beeinträchtigt werden können.

Die erfindungsgemäßen Copolymerisate besitzen je nach ihrer Monomerzusammensetzung und der

Anzahl der in ihnen enthaltenen Polymerblöcke (d.h. de Anzahl der zur Reaktion gebrachten Monomermischungs-Portionen "r") verschiedene Eigenschaften von kristallin spröde bis amorph kautschukelastisch.

Die Verarbeitung der Polymerisate richtet sich nach ihren Eigenschaften. So können z.B. aus Polymerisaten mit thermoplastichen Eigenschaften mit bekannten Thermoplastverarbeitungsverfahren Formkörper hergestellt werden.

Überraschenderweise sind die neuen Polymeren bei der Verarbeitung auch über 150 °C noch ausreichend stabil und zeigen keinen molekularen Abbau. Deshalb haben daraus hergestellte Formkörper sehr gute mechanische Eigenschaften, die auch nach mehrmaliger Temperaturbelastung erhalten bleiben.

Die erfindungsgemäßen Copolymerisate eignen sich vorzugsweise - je nach ihrem chemischen Aufbau - zur Herstellung von Folien, Dichtungen, Beschichtungen, insbesondere dort, wo verbessertes Langzeitverhalten gebraucht wird; sie sind ebenfalls geeignet zur Herstellung von harzartigen, thermoplastischen Verpackungsmaterialien, insbesondere für Lebensmittel.

Die erfindungsgemäßen Polymerisate lassen sich in bekannter Weise stabilisieren, pigmentieren und mittels üblicher Additive antistatisch ausrüsten, besser verarbeitbar oder flammfest machen oder mit Füllstoffen füllen.

## Beispiele

### Beispiel 1

Herstellung eines Copolymeren aus Neopentylglykolcarbonat und ε-Caprolacton (50 Mol-%:50 Mol-%)

$$\left[ A - X - B \right]_1$$

(A = Polyneopentylglykolcarbonat-Block,
B = Poly-ε-Caprolacton-Block
X = Mittelstück aus Neopentylglykolcarbonat- und ε-Caprolacton-Einheiten)

Zu einer Lösung von 0,2 ml sek.-Butyllithium (1,4 m Lösung in Cyclohexan) in 10 ml Toluol wurde bei -10 °C eine Lösung von 10,2 g Neopentylglykolcarbonat und 8,9 g ε-Caprolacton in 100 ml Toluol gegeben. Nach 160 Minuten war ein Umsatz von 90 % erreicht; die Zersetzung des Reaktionsgemisches erfolgte mit 10 ml Methanol/Salzsäure (Gewichtsverhältnis 9:1). Das Reaktionsprodukt wird durch Fällung mit 250 ml Methanol isoliert.

### Beispiel 2

Herstellung eines Copolymeren aus Neopentylglykolcarbonat und ε-Caprolacton (50 Mol-%:50 Mol-%)

$$\left[ A - X - B \right]_2$$

(Zur Bedeutung von A, X und B siehe Beispiel 1).

Zu einer Lösung von 0,2 ml sek.-Butyllithium (1,4 m Lösung in Cyclohexan) in 10 ml Toluol wurde bei -10 °C eine Lösung von 5,35 g Neopentylglykolcarbonat und 4,7 g ε-Caprolacton in 50 ml Toluol gegeben und 120 Minuten bei dieser Temperatur gerührt. Danach wurde eine weitere Lösung von 5,35 g Neopentylglykolcarbonat und 4,7 g ε-Caprolacton in 50 ml Toluol zugegeben und wieder 120 Minuten bei -10 °C reagieren gelassen. Die Aufarbeitung erfolgte durch Zersetzung des Reaktionsgemisches mit 10 ml Methanol/Salzsäure (Gewichtsverhältnis 9:1) und Fällung mit 250 ml Methanol.

### Beispiel 3

Herstellung eines Copolymeren aus Neopentylglykolcarbonat und ε-Caprolacton (50 Mol-%:50 Mol-%)

$$\left[ A - X - B \right]_3$$

(Zur Bedeutung von A, X und B siehe Beispiel 1).

Es wird eine Lösung von 10,6 g Neopentylglykolcarbonat und 9,3 g ε-Caprolacton in 100 ml Toluol hergestellt und auf -10 °C abgekühlt. Ein Drittel der Lösung wird ins Reaktionsgefäß zu 0,2 ml sek. Butyllithium (1,4 m Lösung in Cyclohexan) in 10 ml Toluol gegeben und 70 Minuten bei -10 °C gerührt.

Danach wird das zweite Drittel der Lösung zugegeben und nach weiteren 120 Minuten das letzte Drittel, welches man nochmals 120 Minuten lang reagieren läßt. Die Aufarbeitung erfolgte durch Zersetzung des Reaktionsgemisches mit 10 ml Methanol/Salzsäure (Gewichtsverhältnis 9:1) und Fällung mit 220 ml Methanol.

Beispiel 4

Herstellung eines Copolymeren aus Neopentylglykolcarbonat und ε-Caprolacton (60 Mol-%:40 Mol-%)

$\{ A - X - B \}_1$

Zu einer Lösung von 0,4 ml sek.-Butyllithium (1,4 m Lösung in Cyclohexan) in 10 ml Toluol wurde bei -10 °C eine Lösung von 15,6 g Neopentylglykolcarbonat und 9,1 g ε-Caprolacton in 120 ml Toluol gegeben. Nach 160 Minuten ist ein Umsatz von 86 % erreicht. Nach Zersetzung mit 10 ml Methanol/Salzsäure (Gewichtsverhältnis 9:1) wird das Reaktionsprodukt durch Fällung mit 260 ml Methanol isoliert.

Beispiel 5

Herstellung eines Copolymeren aus Neopentylglykolcarbonat und ε-Caprolacton (30 Mol-%:70 Mol-%)

$\{ A - X - B \}_1$

Zu einer Lösung von 0,4 ml sek.-Butyllithium (1,4 m Lösung in Cyclohexan) in 10 ml Toluol wurde bei -10 °C eine Lösung von 7,8 g Neopentylglykolcarbonat und 15,96 g ε-Caprolacton in 95 ml Toluol gegeben. Nach 160 Minuten beträgt der Umsatz >95 %. Die Aufarbeitung erfolgt wie in Beispiel 4 beschrieben.

Beispiel 6

Herstellung eines Copolymeren aus Neopentylglykolcarbonat und ε-Caprolacton (80 Mol-%:20 Mol-%)

$\{ A - X - B \}_1$

Zu einer Lösung von 0,4 ml sek.-Butyllithium (1,4 m Lösung in Cyclohexan) in 10 ml Toluol wurde bei -10 °C eine Lösung von 20,8 g Neopentylglykolcarbonat und 4,56 g ε-Caprolacton in 80 ml Toluol gegeben. Nach 160 Minuten beträgt der Umsatz >95 %. Die Aufarbeitung erfolgt wie in Beispiel 4 beschrieben.

**Patentansprüche**

**1.** Sequenzartig aufgebaute Polymere der idealisierten Formel (I)

$$\{A - X - B\}_r \qquad (I)$$

mit r = 1 bis 20, worin

-A- = Polymerisat mit mittlerem Molekulargewicht 500 - 1.000.000 eines cyclischen Carbonates der allgemeinen Formeln (II) und/oder (III)

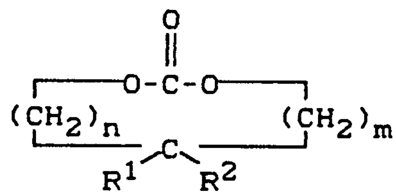

(II)

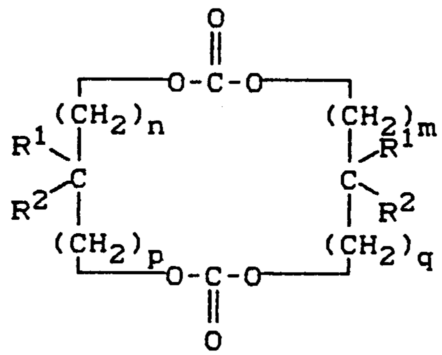

(III)

-B- = Polymerisat mit mittlerem Molekulargewicht 500 - 1.000.000 eines Lactons der allgemeinen Formel (IV)

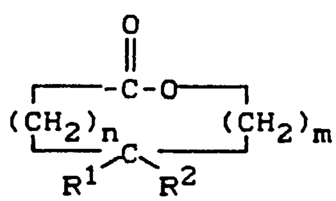

X = Mittelstück mit mittlerem Molekulargewicht 500 - 10.000, enthaltend sowohl das cyclische Carbonat der Formel (II) und/oder (III) als auch das Lacton der Formel (IV) in polymerisierter Form, wobei die Konzentration der Reste von (II) und/oder (III) in Richtung auf -B- und die Konzentration der Reste (IV) in Richtung auf -A- kontinuierlich abnimmt ("tapered structure") wobei in den Formeln (II), (III) und (IV) m, n, p und q unabhängig voneinander 0, 1, 2, 3, 4, 5 oder 6 sind mit den Bedingungen, daß die Summe n+m in (II) mindestens 1, die Summe n+m in (IV) mindestens 1 und die Summen n+p sowie m+q in (III) mindestens 1 betragen, und $R^1$ und $R^2$ = H, $C_{1-6}$-Alkyl, $C_{3-6}$-Alkenyl, $C_{1-6}$-Alk(en)yloxy-$C_{1-6}$-alkyl, insbesondere H, $CH_3$ und $C_2H_5$ bedeuten.

**2.** Verfahren zur Herstellung der Polymerisate gemäß Anspruch 1, dadurch gekennzeichnet, daß man eine Lösung eines Gemisches aus cyclischen Carbonaten der Formeln (II) und/oder (III) und Lactonen der Formel (IV) in einem aromatischen Lösungsmittel oder einem Ether portionsweise zu einer Lösung einer Alkylalkalimetall- bzw. Arylalkalimetall-Verbindung gibt, bei Temperaturen von 20 °C bis -78 °C polymerisiert und danach das Polymere isoliert.

**3.** Verfahren gemäß Anspruch 2, dadurch gekennzeichnet, daß man im Anschluß an die Polymerisation neutralisiert oder das gebildete anionische Polymere mit einem Alkylhalogenid, Carbonsäurechlorid, Carbonsäureanhydrid oder Carbonsäureester umsetzt.

## Claims

**1.** Sequential copolymers having the following idealized formula

$\{A - X - B\}_r$ (I)

with r = 1 to 20, in which

-A- is a polymer having an average molecular weight of 500 to 1,000,000 of a cyclic carbonate

corresponding to general formulae (II) and/or (III) below

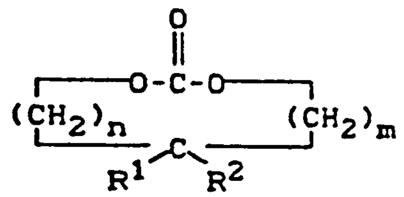

(II)

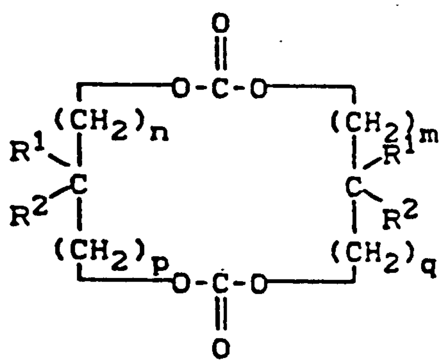

(III)

-B- is a polymer having an average molecular weight of 500 to 1,000,000 of a lactone corresponding to general formula (IV) below

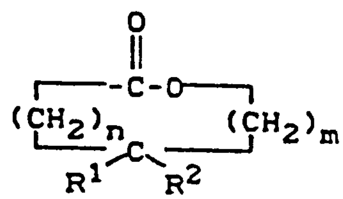

X is a central link having an average molecular weight of 500 to 10,000 and containing both the cyclic carbonate of formula (II) and/or (III) and the lactone of formula (IV) in polymerized form, the concentration of the residues of (II) and/or (III) decreasing continuously in the direction of -B- and the concentration of the residues (IV) decreasing continuously in the direction of -A- ("tapered structure"); in formulae (II), (III) and (IV), m, n, p and g independently of one another have the values 0,1,2,3,4,5 or 6, with the proviso that the sum of n + m in (II) is at least 1, the sum of n + m in (IV) is at least 1 and the sums of n + p and m + q in (III) are at least 1, and $R^1$ and $R^2$ represent H, $C_{1-6}$ alkyl, $C_{3-6}$ alkenyl, $C_{1-6}$ alk(en)yloxy-$C_{1-6}$-alkyl, more especially H, $CH_3$ and $C_2H_5$.

2. A process for the production of the polymers claimed in claim 1, characterized in that a solution of a mixture of cyclic carbonates corresponding to formulae (II) and/or (III) and lactones corresponding to formula (IV) in an aromatic solvent or an ether is added in portions to a solution of an alkyl alkali metal or aryl alkali metal compound, the combined solutions are polymerized at 20°C to -78°C and the polymer is subsequently isolated.

3. A process as claimed in claim 2, characterized in that, on completion of polymerization, the polymer is neutralized or the anionic polymer formed is reacted with an alkyl halide, carboxylic acid chloride, carboxylic anhydride or carboxylic acid ester.

## Revendications

1. Polymères à structure séquencée de formule idéalisée I

$\{A - X - B\}_r$ (I)

dans laquelle r = 1 à 20, et

-A- = polymère, de poids moléculaire moyen 500 à 1 000 000, d'un carbonate cyclique de formule générale II et/ou III

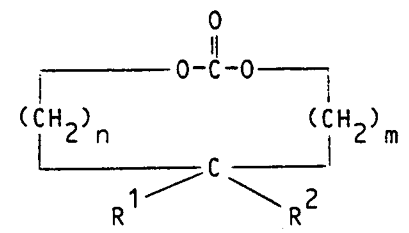

(II)

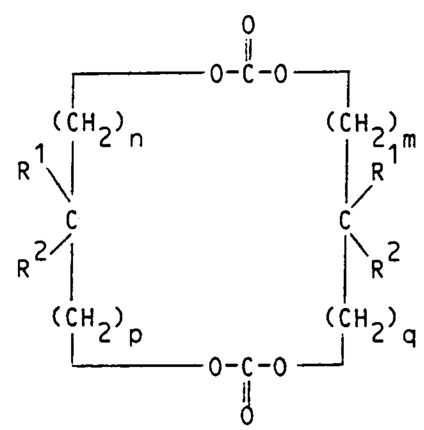

(III)

-B- = polymère, de poids moléculaire 500 à 1 000 000, d'une lactone de formule générale IV

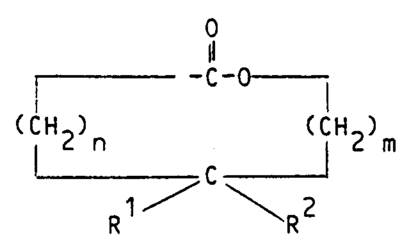

(IV)

X = élément médian, de poids moléculaire moyen 500 à 10 000, contenant à la fois le carbonate cyclique de formule II et/ou III et la lactone de formule IV à l'état polymérisé, la concentration des motifs de II et/ou III diminuant en continu en allant vers -B- et la concentration des motifs IV diminuant en continu en allant vers -A- (structure "tapered"),

les indices m, n, p et q des formules II, III et IV étant égaux chacun, indépendamment les uns des autres, à 0, 1, 2, 3, 4, 5 ou 6, sous réserve que la somme n+m est égale au moins à 1 dans II, la somme n+m est égale au moins à 1 dans IV et les sommes n+p et m+q sont égales au moins à 1 dans III, et

$R^1$ et $R^2$ = H, alkyle en $C_1$-$C_6$, alcényle en $C_3$-$C_6$ (alkyle ou alcényle en $C_1$-$C_6$)-oxy-alkyle en $C_1$-$C_6$, plus particulièrement H, $CH_3$ et $C_2H_5$.

**2.** Procédé de préparation des polymères de la revendication 1, caractérisé en ce que l'on ajoute une solution d'un mélange de carbonates cycliques de formule II et/ou III et de lactones de formule IV dans un solvant aromatique ou un éther, par portions, à une solution d'un métal alcalin-alkyle ou d'un métal alcalin-aryle, on polymérise à des températures de 20 à -78°C puis on isole le polymère.

**3.** Procédé selon la revendication 2, caractérisé en ce que, après la polymérisation, on neutralise ou on fait réagir le polymère anionique formé avec un halogénure d'alkyle, un chlorure d'acide carboxylique,

un anhydride d'acide carboxylique ou un ester d'acide carboxylique.